Europäisches Patentamt

European Patent Office

Office européen des brevets

(11) Publication number: **0 566 645 B1**

# EUROPEAN PATENT SPECIFICATION

(45) Date of publication of patent specification: **26.10.94**  (51) Int. Cl.5: **A23J 3/30**

(21) Application number: **92903364.5**

(22) Date of filing: **10.01.92**

(86) International application number:
**PCT/DK92/00008**

(87) International publication number:
**WO 92/11771 (23.07.92 92/19)**

(54) **METHOD FOR PRODUCTION OF A VEGETABLE PROTEIN HYDROLYZATE.**

(30) Priority: **10.01.91 DK 39/91**

(43) Date of publication of application:
**27.10.93 Bulletin 93/43**

(45) Publication of the grant of the patent:
**26.10.94 Bulletin 94/43**

(84) Designated Contracting States:
**AT BE CH DE DK ES FR GB GR IT LI LU NL SE**

(56) References cited:
**EP-A- 0 325 986      US-A- 4 100 024**
**US-A- 4 324 805      US-A- 4 420 425**
**US-A- 4 431 629      US-A- 4 482 574**

**American Chemical Society Symposium,**
**Vol. 154, 1980 Albin F. Turbak: "Synthetic**
**Membranes: Volume II, Hyper- and Ultrafil-**
**trations Uses", pp. 132-169**

(73) Proprietor: **NOVO NORDISK A/S**
**Novo Allé**
**DK-2880 Bagsvaerd (DK)**

(72) Inventor: **ERIKSEN, Svend**
**Delfinvej 8**
**DK-3450 Alleröd (DK)**
Inventor: **NIELSEN, Per, Munk**
**Rytterstien 29A**
**DK-3400 Hiller d (DK)**
Inventor: **HANSEN, Ole, Regnar**
**Kastagervej 23B**
**DK-2730 Herlev (DK)**
Inventor: **KRISTENSEN, Svend, Erik**
**Langkaer Vaenge 1A**
**DK-3500 Vaerlöse (DK)**

(74) Representative: **Bach, Niels**
**c/o Novo Nordisk A/S,**
**Patent Dept.,**
**Novo Allé**
**DK-2880 Bagsvaerd (DK)**

## Description

The invention comprises a method for production of a vegetable protein hydrolyzate.

Methods of this kind usually comprise a pretreatment of a raw protein, in order to remove non-protein components, a hydrolysis, and a posttreatment in order to purify the protein hydrolyzate. An example of the pretreatment appears from US 4,420,425, an example of the hydrolysis appears from US 4,324,805 and 4,100,024, and an example of the pretreatment and posttreatment appears from American Chemical Society Symposium No. 154, Synthetic Membranes. Vol. II, Hyper- and Ultrafiltration Uses.

Many methods for production of a protein hydrolyzate with good organoleptic properties can be carried out with a low yield only. Thus, it is the purpose of the invention to indicate a method for production of a protein hydrolyzate with good properties, which can be carried out with a relatively high yield.

Surprisingly, according to the invention it has been found that a certain combination of an ultrafiltration and a non-pH-stat hydrolysis provides a process for production of a well tasting and organoleptically acceptable product in high yield.

Thus, the method according to the invention for production of a vegetable protein hydrolyzate is characterized by the fact

1) that vegetable protein and water is mixed to a slurry with a protein content up to 20%, preferably up to 10%,

2) that the pH of the slurry from step 1) is adjusted to a value, which is more than 3 pH-units from the isoelectric point of the protein,

3) that after dissolution or substantial dissolution of the protein the solubilized proteins are separated from the slurry,

4) that the supernatant from step 3 is ultrafiltered with an ultrafiltration unit with a cut-off value of above 20,000 Daltons,

5) that the retentate from step 4) is heat treated during such time period that the proteins are denatured,

6) that the denatured proteins in the retentate are proteolytically hydrolyzed by means of at least one protease at pH values and temperatures close to the optimum pH values and temperatures for the protease(s), by means of a non-pH-stat method to a DH of between 15 and 30%,

7) that the hydrolysis is terminated by inactivation of the enzyme(s),

8) that the effluent from step 7 is concentrated on an ultrafiltration unit with cut-off value above 5,000 to the maximum value or approx. the maximum value of DS in the retentate, whereafter a diafiltration with water is carried out until the percentage of DS in the permeate is below 0.9%,

9) that the permeate from step 8) is heated to between 130 and 140°C and immediately thereafter flashcooled to around 75°C and then cooled in a heat exchanger to between 50 and 70°C, and

10) that the effluent from step 9) is concentrated and desalinated by nanofiltration at a temperature between 50 and 60°C, whereafter the retentate is collected as the protein hydrolyzate solution.

It is to be understood that the vegetable protein used as raw material in step 1 can be any vegetable protein, e.g. soy protein, sesame protein, pea protein, rape seed protein, and faba bean protein.

Also, it is to be understood that some of the above steps can be omitted under certain circumstances. Thus, step 3) can be omitted, if a lower ratio protein/dry matter can be accepted, step 5) can be omitted, if protein denaturation at this stage (i.e. before hydrolysis) is unnecessary, step 7) can be omitted, if inactivation of the enzyme(s) takes place during step 8) - 10), step 9) can be omitted, if the organoleptic properties of the protein hydrolyzate is already satisfactory, and step 10) can be omitted, if no concentration of the hydrolyzate is wanted, and if a high salinity and osmolality can be accepted.

Furthermore, the steps 1-10 indicated above are not necessarily performed consecutively. Thus, step 3) can be performed immediately after step 4), step 6), step 7) or step 8); step 4) can be performed immediately after step 5); step 7) can be performed immediately after step 8), step 9) or step 10); and step 9) can be performed immediately before step 7) or step 8).

A preferred embodiment of the method according to the invention comprises that the protein in step 1) is soy meal with high PSI (> 50% at pH 6.5). Soy meal with high PSI (> 50% at pH 6.5) is a readily available raw material well suited for the method according to the invention. PSI is Protein Solubility Index.

A preferred embodiment of the method according to the invention comprises that the soy meal is defatted. Defatted soy meal is cheap, and with this raw material the process runs smoothly.

A preferred embodiment of the method according to the invention comprises that the slurry in step 1) has a protein content of around 8%. In this manner the equipment is utilized optimally, and also, the viscosity is not too high for handling.

A preferred embodiment of the method according to the invention comprises that the temperature during the steps 1) to 4) is above 60°C. In this manner bacterial growth will be limited.

A preferred embodiment of the method according to the invention comprises that the separation in step 3) is carried out by means of gravity separation, preferably centrifugation. This separation is efficient and cheap.

A preferred embodiment of the method according to the invention comprises that the protease or one of the proteases used during step 6) is a *Bacillus* protease. In this manner use can be made of cheap, commercial enzymes.

A preferred embodiment of the method according to the invention comprises that the *Bacillius* protease is a *Bacillus licheniformis* protease. In this manner a simple process and a good yield is provided.

A preferred embodiment of the method according to the invention comprises that at least two proteases are used during step 6), i.e. a *Bacillus licheniformis* protease and a *Bacillus subtilis* protease. In this manner a very high yield and a good taste of the end product is provided.

A preferred embodiment of the method according to the invention comprises that the mixture at the end of step 7) is treated with activated carbon for more than 5 minutes at between 50 and 70°C in an amount corresponding to between 1 and 5% carbon, calculated in relation to soluble protein hydrolyzate. Hereby an end product with better organoleptic properties is achieved: better taste, no off-flavor, and better color. This embodiment is specially preferred in those cases, where the retentate by-product can not be utilized.

A preferred embodiment of the method according to the invention comprises that the mixture at the end of step 10) is treated with activated carbon for more than 5 minutes at between 50 and 70°C in an amount corresponding to between 1 and 5% carbon, calculated in relation to soluble protein hydrolyzate, whereafter the activated carbon is removed, and the filtrate is collected as the protein hydrolyzate solution. Hereby an end product with better organoleptic properties is achieved: better taste, no off-flavor, and better color.

A preferred embodiment of the method according to the invention comprises that the protein hydrolyzate solution from step 10) is spray-dried to a water content below 6.5%. In this manner a stable product is achieved, both microbially and organoleptically.

A preferred embodiment of the method according to the invention comprises that

11) that the protein hydrolyzate solution from step 10) is sterile filtered,

12) that the sterile filtrate from step 11) is concentrated to a concentration of between 40 and 60 total DS,

13) that the concentrate from step 12) is pasteurized, and

14) that the pasteurized concentrate from step 13) is spray-dried to a water content of below 6.5%.

If a spray-drying tower for treatment of the effluent for step 10) is not available in the factory at the appropriate time, steps 11), 12), and 13) may be carried out, whereafter step 14) can be performed, when the spray-drying tower becomes available.

Danish patent application no. 1498/87 describes a process with vegetable seeds as a starting material, in which some of the process steps are similar to the process steps used in the process according to the invention. However, the end product of the prior art process is a protein isolate, i.e. not a protein hydrolyzate, and this protein isolate is an insoluble coagulate and thus not a soluble protein hydrolyzate as in relation to the process according to the invention.

EP 325 986 describes a method for the hydrolysis of food grade proteins by means of a special combination of proteolytic enzymes. However, the non-pH-stat-hydrolysis and the ultrafiltration used in the method according to the invention is not used in the prior art method. Also, according to the prior art method a product is produced which is not fully soluble, in contradistinction to the product produced by means of the method according to the invention.

## EXAMPLE 1

### Mixing

Untoasted defatted soy meal with a PSI of 55% at pH 6.5 and water are mixed to a dry matter content of 10% at a temperature of 62-63°C. The pH of the slurry is adjusted to 8.5 with 4N NaOH.

### Extraction

After 30 minutes holding time the soluble proteins are extracted from the sludge by means of two centrifugation steps whereby an extraction efficiency of approx. 90% is obtained.

After the first centrifugation the sludge is rediluted with deionized water, still at 62-63°C, and passed over the second centrifugation step whereafter the sludge is disposed.

The centrifugate from both centrifugations are collected in the feed tank to the first ultrafiltration unit.

It is very important that the temperature of the process liquid during mixing, extraction and ultrafiltration 1 is always above 60°C in order to limit bacterial growth and that the temperature is below 64-65°C during mixing and extraction in order to prevent protein denaturation, excess coloring and degradation of the organoleptic properties.

## Ultrafiltration 1

The centrifugate is ultrafiltered in order to wash out carbohydrates and salts from the protein extract. The uftrafiltration unit is run at 65°C. The centrifugate is concentrated to maximum 5.5% DS and diafiltered by addition of deionized water until

$$\frac{\% \ DS \ (permeate)}{\% \ DS \ (retentate)} = 0.09$$

Then the retentate is concentrated to 9-10% DS.
The permeate is disposed.

## Heat treatment

The retentate is heat treated at 85°C for 1 minute in order to denature the proteins, thereby facilitating the hydrolysis. At the same time the bacterial counts in the process liquid is lowered.

## Hydrolysis

The heat treated retentate is delivered to the hydrolysis tank at 55°C, and pH is adjusted to 8.5 by means of 4N NaOH.

The hydrolysis is started by addition of Alcalase® 2.4 L corresponding to E/S = 2%. When pH has passed 7.0, Neutrase® 0.5 L corresponding to E/S = 1% is added, and the hydrolysis takes place during the next 10-12 hours obtaining a % DH (TNBS-method) of around 20%. The degree of hydrolysis can easily be followed by measuring the increase in osmolality during the hydrolysis.

## Inactivation and enzyme treatment

The hydrolysis is stopped by lowering the pH to 4.2 by addition of 30% HCl. Then Viscozyme 120L corresponding to E/S = 0.1% is added for enzyme treatment.

## Carbon treatment

Activated carbon (Picatif 120 FGV EWN) is mixed in the inactivated/enzyme treated hydrolysis mixture and should react for 30 minutes with slow agitation at 55°C. The carbon treatment is performed in order to improve the color and the organoleptic properties of the hydrolyzate. The dosage of activated carbon is calculated as 3% of dry matter measured as ° Brix.

## Ultrafiltration 2

The slurry from the carbon treatment is heated to 65°C and is concentrated on the ultrafiltration unit to approx. 8-9% DS followed by diafiltration by addition of deionized water until % DS in the permeate is below 0.9%. At last the retentate is concentrated as much as possible in order to maximize the yield. The retentate is disposed.

## Flash

The permeate from ultrafiltration 2 is heated to 135°C by steam injection and within few seconds flash cooled to approx. 75°C followed by cooling in a plate heat exchanger to 55°C. The flash process is improving the organoleptic properties, and furthermore a positive effect on the bacterial counts is obtained.

## Nanofiltration

The flashed process liquid is concentrated and desalinated by nanofiltration at 55°C. On AFC 30 membranes from PCI Membrane Systems the osmolality after concentration will be below 180 mOsm/kg $H_2O$ at 7.5° Brix without diafiltration. In case lower osmolality is desired diafiltration with addition of deionized water can be performed before the final concentration.

The nanofiltration is stopped at 30°C Brix because of low flux.

## Sterilizing filtration

The concentrate from nanofiltration is filtered at approx. 50°C on Supra EKS sheets rinsed with citric acid solution (50 l/m$^2$ at pH = 4.2) and deionized water to neutral pH before steaming. The filter sheets are precoated with 0.25 kg Hyflo Super Cel and 0.25 kg Clarcel CBL-3 per m$^2$.

## Evaporation

The protein hydrolyzate is further concentrated to 60° Brix by vacuum evaporation at Tin/Tout = 70/40°C.

## Pasteurization

The concentrated protein hydrolyzate is pasteurized in a plate heat exchanger for 4 seconds at 85°C. The pasteurized concentrate is cooled to 4-8°C and stored into a sterile tank until drying.

Spray-drying

The protein hydrolyzate is spray-dried and agglomerated at Tin 200°C. The water content in the spray-dried powder should be below 6.5% to obtain satisfactory stability of the powder.

**EXAMPLE 2**

Mixing

30 kg of sesame flour with a protein content of 44.6% is mixed with 270 l of demineralized water at 65°C.

Ultrafiltration 1

The mixture is ultrafiltrated to remove soluble carbohydrates. Diafiltration with 2 volumes of water and concentration to 8% protein.
The permeate is disposed.

Heat treatment

The retentate is heat treated to 85°C for 5 minutes.

Hydrolysis

The heat treated retentate is delivered to the hydrolysis tank at 55°C, and pH is adjusted to 8.0 by means of $Ca(OH)_2$.
The hydrolysis is started by addition of Alcalase® 2.4 L corresponding to E/S = 2%. When pH has passed 7.0, Neutrase® 0.5 L corresponding to E/S = 1% is added, and the hydrolysis takes place during the next 10-12 hours obtaining a % DH (TNBS-method) of around 20%. The degree of hydrolysis can easily be followed by measuring the increase in osmolality during the hydrolysis.

Inactivation and enzyme treatment

The hydrolysis is stopped by lowering the pH to 4.2 by addition of 30% HCl.

Ultrafiltration 2

The mixture from the inactivation is heated to 65°C and is concentrated on the ultrafiltration unit to approx. 8-9% DS followed by diafiltration by addition of deionized water until % DS in the permeate is below 0.9%. At last the retentate is concentrated as much as possible in order to maximize the yield. The retentate is disposed.

Flash

The permeate from ultrafiltration 2 is heated to 135°C by steam injection and within few seconds flash cooled to approx. 75°C followed by cooling in a plate heat exchanger to 55°C. The flash process is improving the organoleptic properties, and furthermore a positive effect on the bacterial counts is obtained.

Nanofiltration

The flashed process liquid is concentrated and desalinated by nanofiltration at 55°C. On HC 50 membranes from DDS the osmolality after concentration will be below 180 mOsm/kg $H_2O$ at 7.5° Brix without diafiltration. In case lower osmolality is desired diafiltration with addition of deionized water can be performed before the final concentration.
The nanofiltration is stopped at 30°C Brix because of low flux.

Carbon treatment

Activated carbon (Picatif 120 FGV EWN) is mixed in the inactivated/enzyme treated hydrolysis mixture and should react for 30 minutes with slow agitation at 55°C. The carbon treatment is performed in order to improve the color and the organoleptic properties of the hydrolyzate. The dosage of activated carbon is calculated as 3% of dry matter measured as ° Brix.

Sterilizing filtration

The concentrate from carbon treatment is filtered at approx. 50°C on Supra EKS sheets rinsed with citric acid solution (50 l/m² at pH = 4.2) and deionized water to neutral pH before steaming. The filter sheets are precoated with 0.25 kg Hyflo Super Cel and 0.25 kg Clarcel CBL-3 per m².

Spray-drying

The protein hydrolyzate is spray-dried and agglomerated at Tin 200°C. The water content in the spray-dried powder should be below 6.5% to obtain satisfactory stability of the powder.

**Claims**

1. Method for production of a vegetable protein hydrolyzate, characterized by the fact
   1) that vegetable protein and water is mixed to a slurry with a protein content up to 20%, preferably up to 10%,
   2) that the pH of the slurry from step 1) is adjusted to a value, which is more than 3 pH-units from the isoelectric point of the protein,

3) that after dissolution or substantial dissolution of the protein the solubilized proteins are separated from the slurry,

4) that the supernatant from step 3 is ultrafiltered with an ultrafiltration unit with a cut-off value of above 20,000 Daltons,

5) that the retentate from step 4) is heat-treated during such time period that the proteins are denatured,

6) that the denatured proteins in the retentate are proteolytically hydrolyzed by means of at least one protease at pH values and temperatures close to the optimum pH values and temperatures for the protease(s), by means of a non-pH-stat method to a DH (Degree of Hydrolysis) of between 15 and 30%,

7) that the hydrolysis is terminated by inactivation of the enzyme(s),

8) that the effluent from step 7 is concentrated on an ultrafiltration unit with cut-off value above 5,000 to the maximum value or approx. the maximum value of DS (Dry Substance) in the retentate, whereafter a diafiltration with water is carried out until the percentage of DS in the permeate is below 0.9%,

9) that the permeate from step 8) is heated to between 130 and 140°C and immediately thereafter flashcooled to around 75°C and then cooled in a heat exchanger to between 50 and 60°C, and

10) that the effluent from step 9) is concentrated and desalinated by nanofiltration at a temperature between 50 and 70°C, whereafter the retentate is collected as the protein hydrolyzate solution.

2. Method according to Claim 1, characterized by the fact that the protein in step 1) is soy meal with high PSI (Protein Solubility Index) (> 50% at pH 6.5).

3. Method according to Claim 2, characterized by the fact that the soy meal is defatted.

4. Method according to Claims 1 - 3, characterized by the fact that the slurry in step 1) has a protein content of around 8%.

5. Method according to Claims 1 - 4, characterized by the fact that the temperature during the steps 1) to 4) is above 60°C.

6. Method according to Claims 1 - 5, characterized by the fact that the separation in step 3) is carried out by means of gravity separation, preferably centrifugation.

7. Method according to Claims 1 - 6, characterized by the fact that the protease or one of the proteases used during step 6) is a *Bacillus* protease.

8. Method according to Claim 7, characterized by the fact that the *Bacillus* protease is a *Bacillus licheniformis* protease.

9. Method according to Claim 8, characterized by the fact that at least two proteases are used during step 6), i.e. a *Bacillus licheniformis* protease and a *Bacillus subtilis* protease.

10. Method according to Claims 1 - 9, characterized by the fact that the mixture at the end of step 7) is treated with activated carbon for more than 5 minutes at between 50 and 70°C in an amount corresponding to between 1 and 5% carbon, calculated in relation to soluble protein hydrolyzate.

11. Method according to Claims 1 - 9, characterized by the fact that the mixture at the end of step 10) is treated with activated carbon for more than 5 minutes at between 50 and 70°C in an amount corresponding to between 1 and 5% carbon, calculated in relation to soluble protein hydrolyzate, whereafter the activated carbon is removed, and the filtrate is collected as the protein hydrolyzate solution.

12. Method according to Claims 1 - 11, characterized by the fact that the protein hydrolyzate solution from step 10) is spray-dried to a water content below 6.5%.

13. Method according to Claims 1 -11, characterized by the fact

11) that the protein hydrolyzate solution from step 10) is sterile filtered,

12) that the sterile filtrate from step 11) is concentrated to a concentration of between 40 and 60 total DS,⁻

13) that the concentrate from step 12) is pasteurized, and

14) that the pasteurized concentrate from step 13) is spray-dried to a water content of below 6.5%.

**Patentansprüche**

1. Verfahren zur Herstellung eines pflanzlichen Proteinhydrolysats, gekennzeichnet durch die Tatsache,

1) daß pflanzliches Protein und Wasser zu einer Aufschlämmung mit einem Proteingehalt bis zu 20%, vorzugsweise bis zu 10%, vermischt werden,

2) daß der pH der Aufschlämmung aus Schritt 1) auf einen Wert eingestellt wird, der mehr als 3 pH-Einheiten vom isoelektrischen Punkt des Proteins liegt,

3) daß nach Auflösung oder wesentlicher Auflösung des Proteins die löslich gemachten Proteine von der Aufschlämmung abgetrennt werden,

4) daß der Überstand aus Schritt 3) mit einer Ultrafiltrationseinheit mit einem Schnittwert von über 20.000 Daltons ultrafiltriert wird,

5) daß das Retentat aus Schritt 4) während eines solchen Zeitraumes wärmebehandelt wird, daß die Proteine denaturiert werden,

6) daß die denaturierten Proteine im Retentat mittels wenigstens einer Protease bei pH-Werten und Temperaturen nahe den optimalen pH-Werten und Temperaturen für die Protease(n) mittels eines Nicht-pH-stat-Verfahrens bis zu einem DH (Degree of Hydrolysis) von zwischen 15 und 30% proteolytisch hydrolysiert werden,

7) daß die Hydrolyse durch Inaktivierung des (der) Enzyms (Enzyme) beendet wird,

8) daß der Ablauf aus Schritt 7) auf einer Ultrafiltrationseinheit mit einem Schnittwert über 5.000 bis zu dem maximalen Wert, oder ungefähr dem maximalen Wert von DS (Dry Substance) im Retentat konzentriert wird, woraufhin eine Diafiltration mit Wasser durchgeführt wird, bis der Prozentanteil von DS im Permeat unter 0,9% liegt,

9) daß das Permeat aus Schritt 8) auf zwischen 130 und 140°C erhitzt und unmittelbar danach auf etwa 75°C flashgekühlt und dann in einem Wärmetauscher auf zwischen 50 und 70°C abgekühlt wird und

10) daß der Ablauf aus Schritt 9) durch Nanofiltration bei einer Temperatur zwischen 50 und 70°C, konzentriert und entsalzt wird woraufhin das Retentat als die Proteinhydrolysatlösung gesammelt wird.

2. Verfahren nach Anspruch 1, gekennzeichnet durch die Tatsache, daß das Protein in Schritt 1) Sojaschrotmehl mit hohem PSI (Protein Solubility Index) (> 50% bei pH 6,5) ist.

3. Verfahren nach Anspruch 2, gekennzeichnet durch die Tatsache, daß das Sojaschrotmehl entfettet ist.

4. Verfahren nach den Ansprüchen 1-3, gekennzeichnet durch die Tatsache, daß die Aufschlämmung in Schritt 1) einen Proteingehalt von etwa 8% besitzt.

5. Verfahren nach den Ansprüchen 1-4, gekennzeichnet durch die Tatsache, daß die Temperatur während der Schritte 1) bis 4) über 60°C liegt.

6. Verfahren nach den Ansprüchen 1-5, gekennzeichnet durch die Tatsache, daß die Trennung in Schritt 3) mittels Schwerkrafttrennung, vorzugsweise Zentrifugation, ausgeführt wird.

7. Verfahren nach den Ansprüchen 1-6, gekennzeichnet durch die Tatsache, daß die Protease oder eine der Proteasen, die während Schritt 6) eingesetzt wird, eine Bacillus-Protease ist.

8. Verfahren nach Anspruch 7, gekennzeichnet durch die Tatsache, daß die Bacillus-Protease eine Bacillus licheniformis-Protease ist.

9. Verfahren nach Anspruch 8, gekennzeichnet durch die Tatsache, daß wenigstens zwei Proteasen während Schritt 6) eingesetzt werden, d.h. eine Bacillus licheniformis-Protease und eine Bacillus subtilis-Protease.

10. Verfahren nach den Ansprüchen 1-9, gekennzeichnet durch die Tatsache, daß die Mischung am Ende von Schritt 7) mit Aktivkohle für mehr als 5 Minuten bei zwischen 50 und 70°C in einer Menge, die zwischen 1 und 5% Kohlenstoff entspricht, berechnet in Bezug auf lösliches Proteinhydrolysat, behandelt wird.

11. Verfahren nach den Ansprüchen 1-9, gekennzeichnet durch die Tatsache, daß die Mischung am Ende von Schritt 10) mit Aktivkohle für mehr als 5 Minuten bei zwischen 50 und 70°C in einer Menge, die zwischen 1 und 5% Kohlenstoff entspricht, berechnet in Bezug auf lösliches Proteinhydrolysat, behandelt wird, woraufhin die Aktivkohle entfernt wird und das Filtrat als die Proteinhydrolysatlösung gesammelt wird.

12. Verfahren nach den Ansprüchen 1-11, gekennzeichnet durch die Tatsache, daß die Proteinhydrolysatlösung aus Schritt 10) auf einen Wassergehalt unter 6,5% sprühgetrocknet wird.

13. Verfahren nach den Ansprüchen 1-11, gekennzeichnet durch die Tatsache,

   11) daß die Proteinhydrolysatlösung aus Schritt 10) sterilfiltriert wird,

12) daß das Sterilfiltrat aus Schritt 11) auf eine Konzentration von zwischen 40 und 60 Gesamt-DS konzentriert wird,

13) daß das Konzentrat aus Schritt 12) pasteurisiert wird und

14) daß das pasteurisierte Konzentrat aus Schritt 13) auf einen Wassergehalt unter 6,5% sprühgetrocknet wird.

## Revendications

1. Procédé pour la production d'un hydrolysat de protéine végétale caractérisé par le fait que :

1) la protéine végétale et l'eau sont mélangées à une boue avec une teneur en protéine jusqu'à 20% de préférence jusqu'à 10%,

2) le pH de la boue provenant de l'étape 1) est ajusté à une valeur qui est supérieure à 3 unités-pH à partir du point isoélectrique de la protéine,

3) après la dissolution sensible de la protéine, les protéines solubilisées sont séparées de la boue,

4) le surnageant de l'étape 3) est ultrafiltré avec une unité d'ultrafiltration d'une valeur de coupure supérieure à 20.000 Daltons,

5) le rétentat de l'étape 4) est traité à la chaleur pendant une période permettant de dénaturer les protéines,

6) les protéines dénaturées dans le rétentat sont hydrolysées protéolytiquement au moyen d'au moins une protéase à des valeurs de pH et de température proches de valeurs de pH et des températures optimales pour la ou les protéases au moyen d'un procédé sans pH-stat jusqu'à un DH (Degré d'Hydrolyse) d'entre 15 et 30%,

7) l'hydrolyse est achevée par inactivation de la ou les enzymes,

8) l'effluent provenant de l'étape 7) est concentré sur une unité d'ultrafiltration avec une valeur de coupure supérieure à 5.000 jusqu'à la valeur maximum ou environ la valeur maximum de DS (substance sèche) dans le rétentat après quoi on effectue une diafiltration avec l'eau jusqu'à ce que le % de DS dans le perméat soit au-dessous de 0.9%,

9) le perméat de l'étape 8) est chauffé jusqu'à entre 130 et 140°C et aussitôt après soumis à un refroidissement éclair jusqu'à environ 75°C, puis refroidi dans un échangeur de chaleur jusqu'à une température entre 50 et 60°C, et

10) l'effluent provenant de l'étape 9) est concentré et dessalé par nanofiltration à une température entre 50 et 70°C, après quoi le rétentat est re cueilli sous forme de solution d'hydrolysat de protéine.

2. Procédé selon la revendication 1 caractérisé par le fait que la protéine de l'étape 1) est de la farine de soja avec un PSI élevé (Index de Solubilité Protéine)(>50% à pH 6.5).

3. Procédé selon la revendication 2, caractérisé par le fait que l'on enlève les matières grasses de la farine de soja.

4. Procédé selon les revendications 1-3, caractérisé par le fait que la boue de l'étape 1) à une teneur en protéines d'environ 8%.

5. Procédé selon les revendications 1-4, caractérisé par le fait que la température au cours des étapes 1) à 4) se situent au-dessus de 60°C.

6. Procédé selon les revendications 1-5, caractérisé par le fait que la séparation à l'étape 3) s'effectue au moyen de la séparation par gravité de préférence par la centrifugation.

7. Procédé selon les revendications 1-6, caractérisé par le fait que la protéase ou l'une des protéases utilisées au cours de l'étape 6) est une protéase Bacillus.

8. Procédé selon la revendication 7, caractérisé par le fait que la protéase Bacillus est une protéase Baccillus licheniformis.

9. Procédé selon la revendication 8, caractérisé par le fait qu'au moins deux protéases sont utilisées au cours de l'étape 6), c'est-à-dire une protéase Bacillus licheniformis et une protéase Bacillus subtilis.

10. Procédé selon les revendications 1-9, caractérisé par le fait que le mélange à la fin de l'étape 7) est traité avec du carbone activé pendant plus de 5 minutes à une température entre 50 et 70°C dans une quantité correspondant à entre 1 et 5% de carbone, calculée par rapport à l'hydrolysat de protéine soluble.

11. Procédé selon les revendications 1-9, caractérisé par le fait que le mélange à la fin de l'étape 10) est traité avec du carbone activé pendant plus de 5 minutes à une température entre 50 et 70°C dans une quantité correspondant à entre 1 et 5% de carbone, calculée par rapport à l'hydrolysat de protéine soluble, après quoi on enlève le carbone activé et l'on recueille le filtrat sous forme de solution d'hydrolysat de protéine.

12. Procédé selon les revendications 1-11, caractérisé par le fait que la solution d'hydrolysat de protéine provenant de l'étape 10) est séchée par pulvérisation jusqu'à une teneur en eau inférieure à 6.5%.

13. Procédé selon les revendication 1-11, caractérisé par le fait que :
   11) la solution d'hydrolysat de protéine de l'étape 10) est filtrée de façon stérile,
   12) le filtrat stérile provenant de l'étape 11) est concentré à une concentration entre 40 et 60 DS au total,
   13) le concentrat de l'étape 12) est pasteurisé, et
   14) le concentrat pasteurisé de l'étape 13) est séché par pulvérisation jusqu'à une teneur en eau inférieure à 6.5%.